# EUROPEAN PATENT SPECIFICATION

(11) **EP 3 422 090 B1**
(45) Date of publication and mention of the grant of the patent: **01.04.2020**
(21) Application number: 17178819.3
(22) Date of filing: 29.06.2017
(51) Int. Cl.: G02F 1/1333, G02F 1/13, B65H 35/00

(54) **IMPROVED FRAME AND DISPLAY CONNECTION**
VERBESSERTE RAHMEN- UND ANZEIGEVERBINDUNG
CADRE AMÉLIORÉ ET CONNEXION D'ÉCRAN

(43) Date of publication of application: 02.01.2019
(73) Proprietor: Vestel Elektronik Sanayi ve Ticaret A.S., 45030 Manisa (TR)
(72) Inventor: KUYUCU, Ömer Gökce, 45030 Manisa (TR)
(74) Representative: Ascherl, Andreas

(56) References cited:
- GB-A- 2 407 062
- US-A1- 2010 141 140
- US-A1- 2010 289 980

## Description

The present invention refers according to claim 1 to a method for connecting a frame and a display, according to claim 11 to an electronic device and according to claim 12 to a unit for manufacturing electronic devices.

### Background of the Invention

A LCD cushion consists of contractible fibers with a conductive material to prepare functional fabric pieces. This is applied as tape and used to grounding the LCD CELL to back metal of TV. Due to ESD (Electrostatic Discharge) there is a transfer of an electrostatic change between two objects. This is very rapid event happens when different potential of two object come into direct contact. One of the main causes of device failure in TV industry is ESD.

The TV manufacturing market is using this kind of cushion tape conductors or insulator tapes. Many of TV cell are assembled onto TV frame. Plastic is most used substrate for frame. With respect to Cell type cushion is defined whether conductive or non-conductive to cell surface. Such tapes stick on the inside of TV Plastic frames where cell and TV Plastic frame come together. At this section, conductive cushion tape is intersection among LCD cell and TV Plastic Frame. For application, there are two methods. First application is done by hand. Conductive Cushion tape is cut in a defined dimension in length and width. Second is done by an automatic system. A conductive cushion Tape in roll is applied. Whether automatic systems can handle many of work in standard it cannot solve all hand works at such an application. To make complete frame conductivity all conductive cushion tapes must be contacted to each together on the edges. To make this contact there are very small edge conductive tapes stuck to edges for interconnecting the individual strips. By applying both edges a conductive frame is obtained. All LCD TFT TVs or any item having a LCD TFT screen needs this such a structure to prevent cell from ESD, EMI protection or shielding. No matter size of the frame a main problem is to apply very small edge conductive tapes in to TV plastic frames in a very small area by hand. In case problems appear, the cell will be damaged. Or if any of this edge conductive tapes sticks on a wrong place it can be a failure on the system. Thus, this application style is an inefficient and risky process due to hand application. On the other hand, TV plastic frames are getting thinner day by day. This is an ongoing trend in TV industry.

Document WO2015030168A discloses a method for manufacturing a plate-shaped laminate in which a pair of substantially similarly shaped plate-shaped bodies are affixed to each other by an adhesive and a plate-shaped laminate is manufactured, wherein the method for manufacturing a plate-shaped laminate has: a planar application step for scanning a nozzle having a rectangular discharge groove and thereby applying an adhesive in a rectangular shape onto the first plate-shaped body so that no adhesive is present beyond the outer edges of the first and second plate-shaped bodies; a supplementary application step for applying an adhesive, onto the first or the second plate-shaped body, on portions that are in the vicinity of the four corners of the first and second plate-shaped bodies and that have had no adhesive applied thereto in the planar application step or on portions facing said portions so that no adhesive is present beyond the outer edges of the first and second plate-shaped bodies; and an affixing step for affixing the first and second plate-shaped bodies, to which the planar application step and the supplementary application step have been applied, to each other. In addition, a device for carrying out the manufacturing method.

Document US2010/0141140A1 discloses a plasma display device that can reduce vibration noise of the conductive tape through reducing the vibration of the conductive tape caused by vibration of the outside or inside of the plasma display panel by forming the noise prevention hole in the conductive tape attached to the filter and bracket. The plasma display device includes: a plasma display panel; a filter attached on a front surface of the plasma display panel; a chassis base whose front surface is mounted on the rear surface of the plasma display panel; a driving circuit unit, mounted on the rear surface of the chassis base, driving the plasma display panel; a plurality of brackets, connected to the rear surface of the chassis base, being extended to the front surface of the plasma display panel; and a conductive tape, attached to the filter and bracket, transmitting electromagnetic wave incident on the filter to the chassis base, where the conductive tape includes a plurality of noise prevention holes.

Document KR20140085907A discloses a liquid crystal display (LCD) module which includes an LCD panel and a backlight unit to provide light to the rear surface of the LCD panel. The backlight unit (BLU) is provided therein with a BLU sheet with a plurality of sheets laminated to transmit and provide light emitted from a light source to the LCD panel, and a space in which the BLU sheet is located. The backlight unit is also provided therein with a BLU mold frame for maintaining a shape of the BLU, and curtain tape attached to the top surface of a corner of the BLU mold frame to prevent light leakage which is a phenomenon of leaking light emitted from the light source and to mount the LCD panel. A space is formed between the BLU sheet and the LCD panel in the thickness of the curtain tape. The curtain tape is formed not to deviate from a space on the top surface of the corner of the BLU mold frame.

### Object of the Invention

Thus, it is the object of the present invention to provide an improved method for connecting a display and a frame, an electric device having such an improved connection and a manufacturing unit for executing such a method.

### Description of the Invention

The before mentioned object is solved by a method for connecting a frame and a display. The method according to the present invention is according to claim 1 and comprises at least the steps: Providing a display, in particularly a LCD TFT display, providing a frame for covering or surrounding the display at least in sections, providing an adhesive tape of a first type, wherein the adhesive tape of the first type forms a composition at least comprising multiple layers of material, providing an adhesive tape of a second type, wherein the adhesive tape of the second type forms a composition at least comprising multiple layers of material, wherein the compositions of the adhesive tape of the first type and of the adhesive tape of the second type differ from each other, wherein the adhesive tape of the first type and the adhesive tape of the second type are both comprising at least one conductive layer for conducting electric energy, applying the adhesive tape of the first type and the adhesive tape of the second type by means of one application head onto the display or onto the frame and forming an endless conductor layer by interconnecting the adhesive tape of the first type and the adhesive tape of the second type, connecting the display and frame, wherein at least the adhesive tape of the first type and/or the adhesive tape of the second type forms an adhesive connection between the display and frame. Endless hereby preferably describes a loop

This solution is beneficial since a very fast and reliable connection between a frame and a display can be set up.

Further preferred embodiments are subject-matter of the following specification parts and/or of the dependent claims.

According to a preferred embodiment of the present invention the adhesive tape of the first type at least comprises an adhesive layer, the conductive layer and a polymer layer, in particular comprising or consisting of silicone, wherein the conductive layer is arranged between the adhesive layer and the polymer layer. The adhesive tape of the first type further comprises according to a further preferred embodiment of the present invention an acrylic adhesive layer between the polymer layer and conductive layer, wherein the conductive layer is a conductive cushion layer and wherein the adhesive layer is conductive. This embodiment is beneficial since the tape provides shock absorbability and conductivity.

According to a further preferred embodiment of the present invention the method comprises the step of removing the polymer layer in predefined sections for forming predefined connection areas for setting up conductive connections between the adhesive tape of the first type and the adhesive tape of the second type. This embodiment is beneficial since the connection between two strips of different taps can have a height that is preferably below 3mm or below 2mm.

Removing the polymer layer comprises according to a further preferred embodiment of the present invention a thermal treatment, in particular heating, of the predefined sections, wherein physical properties of the polymer layer are changed due to the thermal treatment. This embodiment is beneficial since due to the temperature treatment the polymer layer can be removed easily. Thus, the risk of destroying the tape compared to sole mechanical removing is significantly reduced. The material/s of the polymer layer and the material/s of the conductive layer preferably have different melting points. The melting point of the material/s of the polymer layer is preferably lower, in particularly at least 10°C or at least 20°C or at least 30°C or at least 50°C or at least 100°C lower that the melting point of the conductive layer.

The polymer layer is heated according to a further preferred embodiment of the present invention during the temperature treatment to a temperature above 20°C and/or below 200°C, in particularly to a temperature between 20°C and 200°C. This solution is beneficial since moderate temperatures are used and thus no further shielding or cooling of further sections is required. Furthermore, since the polymer layer is very thin, the necessary time required to heat it to a desired respectively predefined temperature is short.

Removing the polymer layer further comprises according to a further preferred embodiment of the present invention striping the thermally treated polymer layer by means of at least one heated stripe blade, wherein the heated stripe blade is part of the application head for applicating of at least the adhesive tape of the first type. This embodiment is beneficial since the already treated polymer layer can be easily wiped away. The blade is preferably arranged at the application head since the application head can be moved in a very precise manner due to servo motors or a robotic arm.

The application head comprises according to a further preferred embodiment of the present invention a pressing roller for pressing the stripes against the frame or display and a cutter means, in particularly a pneumatic cutter means, for cutting the tape. This embodiment is beneficial since the tape can applied to the frame or display with a predefined pressure. Thus, a connection between the tape and the substrate, in particular frame or display, can be set up in a very reliable manner.

The adhesive tape of the second type is applied by means of the same application head according to a further preferred embodiment, wherein the application head is moved by means of at least one robot arm or by means of servo motors. This embodiment is beneficial since one head is provided for applying multiple types of tape .

The adhesive tape of the first type and the adhesive tape of the second type are applied according to a further preferred embodiment in form of stripes, wherein the stripes of the adhesive tape of the first type are applied prior to the stripes of the adhesive tape of the second type and wherein the predefined sections of the polymer layer of each stripe of the adhesive tape of the first type are removed prior to the application of the stripes of the adhesive tape of the second type, wherein each end of one stripe of the adhesive tape of the second type covers more than 50% or more than 90% of the surface exposed by removing the polymer layer in the predefined section of a stripe of the adhesive tape of the first type. This embodiment is beneficial since an advanced process for executing the method with highspeed is possible.

The applied adhesive tape of the first type has according to a further preferred embodiment of the present invention a thickness of less than 2mm, in particularly of less than 1,5mm or of less than 1mm or of less than 0,75mm, and a horizontal resistance of 1.0 Ω/mm² or of lower than 1.0 Ω/mm² and a vertical resistance of 1.0 Ω/mm² or of lower than 1.0 Ω/mm², in particularly lower than 0,8 Ω/mm² or lower than 0,6 Ω/mm², and the applied adhesive tape of the second type has a thickness of less than 2mm, in particularly of less than 1,5mm or of less than 1mm or of less than 0,75mm, and a horizontal resistance of 1.0 Ω/mm² or of lower than 1.0 Ω/mm² and a vertical resistance of 1.0 Ω/mm² or of lower than 1.0 Ω/mm², in particularly lower than 0,8 Ω/mm² or lower than 0,6 Ω/mm². This embodiment is beneficial since the thickness of the tape is very small and the electric conductivity is sufficient high. The polymer layer of the first tape preferably has a thickness between 10% and 70%, in particularly between 15% and 50% or between 20% and 40%, of the overall thickness of the first tape.

The adhesive tape of the second type comprises according to a further preferred embodiment of the present invention a conductive adhesive layer and a conductive layer or consists of a conductive adhesive layer and a conductive layer. This solution is beneficial since the adhesive tape of the second type is preferably less complex in comparison with the adhesive tape of the first type and thus cheaper and/or lighter (per length unit). The tape of the first type respectively first tape and the second tape of the second type respectively second tape preferably have the same width. However, it is alternatively conceivable that the width of the first tape is wider than the width of the second tape or vice versa.

The above-mentioned object is also solved by an electronic device according to claim 11.

The electronic device according to the present invention preferably comprises at least a display and a frame, wherein the display and frame are connected by means of an adhesive tape of a first type, wherein the adhesive tape of the first type forms a composition at least comprising multiple layers of material, wherein the adhesive tape of the first type at least comprises an adhesive layer, the conductive layer and a polymer layer, in particular comprising or consisting of silicone, wherein the conductive layer is arranged between the adhesive layer and the polymer layer and an adhesive tape of a second type, wherein the adhesive tape of the second type forms a composition at least comprising multiple layers of material, wherein the adhesive tape of the first type is arranged as stripes, wherein the polymer layer is removed at the ends of each stripe, wherein the adhesive tape of the second type is arranged as stripes, wherein each end of a stripe of an adhesive tape of the second type forms a connection with one end of a stripe of the adhesive tape of the first type by overlaying. Such electronic devices can be TVs, tablet PC, Laptops, smart watches, smartphones, etc.

As end of an adhesive tape of the first type can be preferably be understood a region which extends form a cutting edge in a predefined length, wherein the predefined length preferably matches with the width of the adhesive tape of the second type. Wherein the predefined length can be up to 1% or up to 3% or up to 5% or up to 10% or up to 20% or up to 50% or up to 100% longer than the width of the adhesive tape of the second type.

The above-mentioned object is also solved by a unit for manufacturing electronic devices according to claim 12, in particularly for executing a method according any of claims 1 to 11 The unit according to the present invention preferably comprises an application head for applying an adhesive tape of a first type to a frame or display, wherein the application head comprises a blade for removing a polymer layer from the adhesive tape of the first type and for applying an adhesive tape of a second type to the frame or display, a heating means for heating predefined sections of the adhesive tape of the first type after or while the adhesive tape of the first type is applied in form of strips to the frame or display and an actuator for pressing the frame and display together.

This unit can describe some functions or features which can be integrated or which can be part of an adhesive tape application unit for application of adhesive tapes, wherein said adhesive tapes are comprising metal particles and/or fibers and/or multiple material layers. Said adhesive tape application unit preferably comprises at least a tape supply means for supply of adhesive tape on a carrier layer, a head for separating said adhesive tape and said carrier layer and for applying said adhesive tape to a device surface and a cutting means for cutting said adhesive tape, wherein said cutter means is coupled with an actuator means for moving said cutter means with respect to said head. The head of the adhesive tape application unit is preferably one of the herein described application head or can be modified with features of the herein described application head.

Hence, tape used according to the invention is strong adhesive type tape, strong adhesive is generally used term in market which means that it has metal particles (nickel - copper) and/or fibers inside the tape. Non-strong (weak) adhesive means that adhesives without these components (metal particles and fibers).

This embodiment is beneficial since head and cutting means can be moved with respect to each other, thus adhesive tape application unit can be cleaned more easily since said parts can be separated from each other. Furthermore, the position between cutting means and head can be adapted in dependency of production requirements and said cutting means can be much larger since required force transformation or transmission elements of said cutting means can be larger.

According to a preferred embodiment of said invention said cutter means comprises two cutting blades each having a cutting edge for cutting said adhesive tape, wherein the cutting edges of said cutting blades are arranged in parallel to each other and are linearly movable between a closed situation and an open situation, wherein said cutting edges are applying pressure to each other in said closed situation and wherein said cutting edges are spaced apart from each other in said open situation. It is also conceivable that just one cutting blade is provided, wherein the other cutting blade is replaced by a counter surface for holding said tape.

Said actuator means is according to a further preferred embodiment of the present invention able to position said cutting means with respect to said adhesive tape in such a manner that forces applied by said cutting means onto said adhesive means are aligned in an angle between 70° and 110°, in particular 90°, with respect to the surface of said adhesive tape. This embodiment is beneficial since cutting forces are homogeneously applied to said tape due to these features. In particular deformations occurring during cutting are reduced due to this feature.

Said actuator means is according to a further preferred embodiment of the present invention able to position said cutting means with respect to said adhesive tape in such a manner that each cutting part of each cutting edge fully contacts said adhesive tape at the same time, wherein said cutting edges can be brought in contact with said adhesive tape at the same time or one after another. This embodiment is beneficial since cutting can be carried out in a very precise manner, thus the amount of tape can be reduced while the adhesive coupling of parts to be joined has a better quality.

According to a further preferred embodiment of the present invention said cutting means comprises at least one spring for moving said cutting blades from said closed situation into said open situation and/or a pneumatic actuator for moving said cutting blades from said open situation into said closed situation. This embodiment is beneficial since, forces applied by a pneumatic actuator can be released very fast and easily, thus forces applied by said spring can automatically cause a movement of said cutting blades from said closed situation (cutting situation) into said open situation (tape movement situation).

Head comprises according to a further preferred embodiment of the present invention at least one pin or exactly one pin or at least two pins or exactly two pins or at least three pins or exactly three pins or up to 2, 3, 4, 5 pins. One pin or multiple pins can be forwarding pin/s, which is/are preferably arranged for forwarding said adhesive tape, in particular into the direction of said cutter means or said device surface. One further or alternative pin can be a separation pin. The separation pin is preferably arranged for separating said adhesive tape from a carrier, in particular a foil-like carrier. One further or alternative pin can be a pressure pin for applying pressure to said adhesive tape for applying it to said device surface. All pins are preferably arranged with respect to each other in predefined and fix positions.

Said separation pin has according to a further preferred embodiment of the present invention a diameter of less than 20mm, in particular of less than 10mm or less than 5mm or less than 3mm, like 2mm, wherein a carrier tape transfer means is preferably provided for transferring said separated carrier tape to a preferably rotatable receiving means. This embodiment is beneficial since said carrier tape can be removed in a reliable and fast manner. Furthermore, said carrier tape does not disturb further processing of said device, since said carrier tape is received by said receiving means.

Said pressure pin comprises according to a further preferred embodiment of the present invention at least one bearing, in particular a roller bearing, wherein said pressure pin is rotatable due to said bearing. This embodiment is beneficial since sliding friction between said adhesive tape and said pressure pin can be reduced respectively avoided.

At least one of said pins, in particular said forwarding respectively feeder pin and/or said separation pin and/or said pressure pin, and/or at least one of said cutting blades is according to a further preferred embodiment of the present invention at least in some parts, in particular in most parts of its surface or fully, coated, in particular coated with a material or material mix having an approximate coefficient of friction lower than 0,7 or lower than 0,5 or lower than 0,2 or lower than 0,1, in case said two coated surfaces of said blades are engaging with each other. The coating material is preferably PTFE (Teflon).

The present invention is highly beneficial since a very precise application method is disclosed, which uses thermal properties of laminated layers on conductive cushion tape. According to the invention a fully automated operation without any human interface is possible. Furthermore, maximum process yield for a very strict adhesion area and very strict conductivity tolerance is possible.

According to a further preferred embodiment of the present invention the heating means is part of the application head. This embodiment is beneficial since no further device needs to be positioned close to the tape.

Further benefits, goals and features of the present invention will be described by the following specification of the attached figures, in which components of the invention are exemplarily illustrated. Components of the devices and method according to the invention, which match at least essentially with respect to their function can be marked with the same reference sign, wherein such components do not have to be marked or described in all figures.

The subject-matter of patent application EP 16 206 757.3 dated 23.12.2016 and filed by the applicant at the EPO is hereby mentioned.

### Brief Description of the Drawing

The invention is just exemplarily described with respect to the attached figures in the following:
- Fig. 1: schematically shows the layers of a tape according to a first type,
- fig. 2: schematically shows the arrangement of a frame and a display,
- fig. 3: schematically shows the layers of a tape according to a second type,
- fig. 4: an embodiment according to the state of the art,
- fig. 5: schematically grounding of a display,
- fig. 6: schematically two illustrations of different tapes, and
- fig. 7: components of an application head during a step of the inventive method.

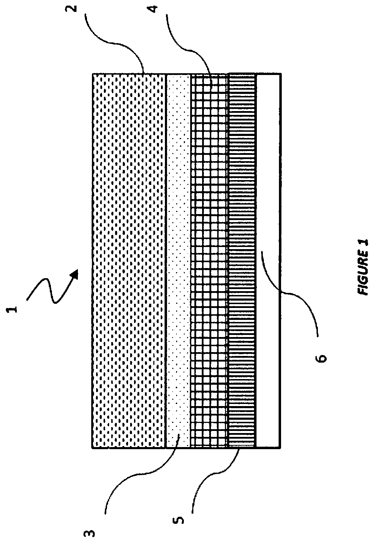

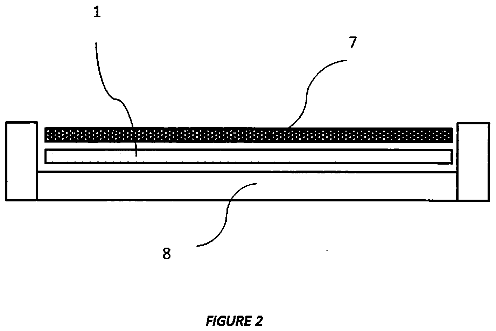

Figure 1 shows a definition of EMI tape layers. Each layer has its own function. Conductive adhesive layer 5 sticks onto plastic TV frames 8 and with its very high conductivity it grounds the TV plastic frame 8 and TV Cell 7 intersection as in figure 2.

Any of TV cell 7 are assembled onto TV frames 8. Plastic is most used substrate for frame 8. With respect to cell type cushion is defined whether conductive or non-conductive to cell surface. According to the present invention the cell side is preferably non-conductive the other side is conductive cushion tape 1 as shown in Figure 1. Such tapes stick on inside of TV Plastic frame 8 where cell 7 and TV Plastic frame 8 come together. At this section, conductive cushion tape 1 is intersection among LCD cell 7 and TV Plastic Frame 8. This tape is structured as in Figure 1. Upper layer of the tape is preferably a silicone layer 2 respectively a layer comprising silicone or a polymer and helps to fix LCD cell 7 onto frame 8. Second Layer is preferably an acrylic adhesive layer 3. It preferably adheres silicone layer 2 to conductive fabric layer 4. To stick on to plastic substrate forth layer is preferably a conductive adhesive layer 5. And to keep conductive cushion tape respectively adhesive tape of first type 1 on a roll and to apply on TV plastic frame 8 fifth layer is a release liner layer 6. It leaves the conductive cushion tape 1 during application.

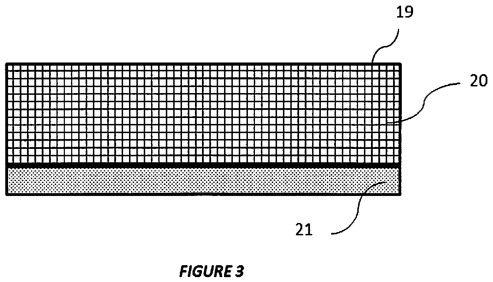

Figure 3 shows the manually applied edge conductive tape 19 respectively the adhesive tape of a second type.

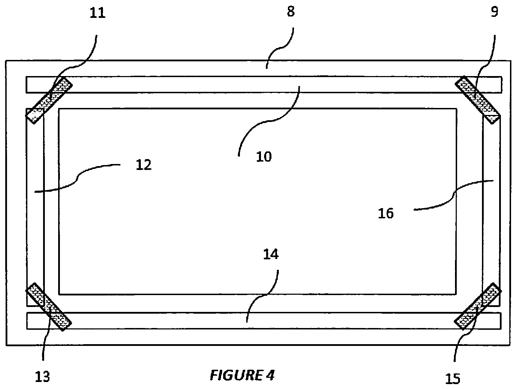

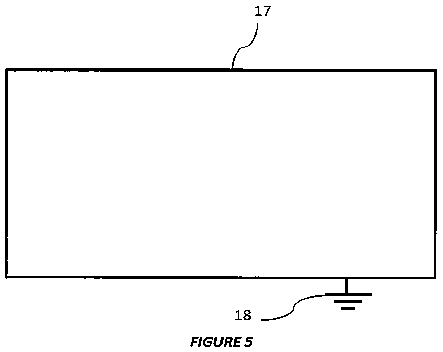

The application shown in figure 4 represents a state of the art continuous conductive layer all around the TV Plastic Frame 7 and LCD cell 8 as in figure 5. The illustration according to fig. 4 represent the standard application using manually applied conductive tapes for edges.

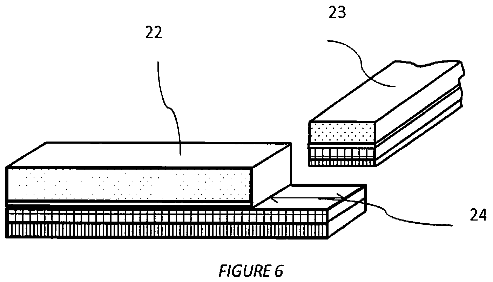

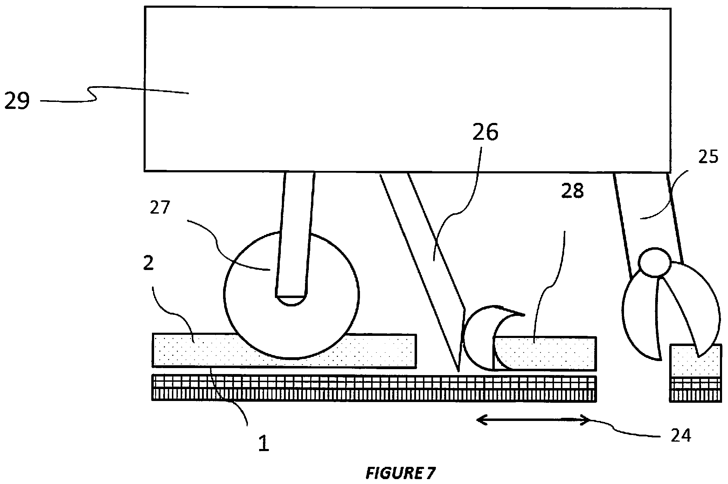

Present invention refers to an automatic application system that enables the processing of frames and/or displays in a continuous manner without edge conductive tapes. This inventive system preferably does not require changes of process parameters in terms of performance and conductivity. There is preferably one application head with servo motor drives or robot respectively robot-arm used applications. This head relates to the head already disclosed in patent application EP 16 206 757.3. The application head receives tape from roll and apply the tape onto frames, in particularly TV frames, made of a substrate, in particular plastic. As a standard application, it starts at one edge and cut the tape at the end of the next edge. In the present case, the head of the system is designed for a continuous application without using edge conductive tapes. There are two different tapes, one is preferably a conductive cushion tape with a silicone layer on it and the other one preferably comprises or consists of a conductive layer, in particularly conductive cushion layer respectively conductive layer for an edge tape, and an adhesive layer for an edge tape. Conductive layers, in particularly of both tape types, are having the same electrical conduciveness and same adhesion properties onto the frame, in particular onto the TV plastic frame 8. Also, their conductive layer properties are the same when silicone layer 2 is striped from conductive cushion tape as shown in figure 6 and 7.

Thus, a new design of application head 29 is proposed and schematically illustrated in figure 7. This head 29 has a unique feature for edge points. It follows the standard application style. The new design gives the head a new property to stripe the silicon layer from conductive layer, preferably as width as the width of the tape, cf. figure 6. This is caused for three edges and the point which is the starting point of the next edge application. The application head comprises a blade for striping. Striping is not an easy process for very thin tapes. There are some restrictions to remove and stripe a polymer, in particular silicon layer 2, from a conductive layer 4 as shown in figure 6. Sharp blades cannot do this without damaging the conductive layer. Since the production process is fast the process of the present solution must be within the cycle time limits of the overall processing. The conductive striped width 24, is preferably not wider than the width of the cushion conductive tape 1 width.

A temperature treatment means, in particular heat element, is preferably used to separate the striper silicon layer 2 from the conductive layer without any damage on the conductive tape. The silicon layer 2 is preferably cured with heat means heat effective layer. Usually beyond 200°C it can be rapidly melted and removed. On the other hand, the conductive layer is not structurally or functionally affected from this thermal treatment, in particular heating. This is one of the key points of the present invention, to release the silicon layer 2 from conductive layer 4.

Preferably, there is additionally a heated stripe blade 26 provided as part of the application head and the heated strip blade can be preferably be modified with features of head discloses in document EP 16 206 757.3.

This makes all 3 edges contacted each other. But 4th edge leaves without striped. For this edge, a new striping method is designed. There is a new sequence when taping is finished for one frame before taping started head stripes the silicon from cushion conductive tape 1. This sequence is done after the last edge taping is finished. The head will work reverse and stripe the starting point of the tape as last step.

Thus, the present invention refers to a method for connecting a frame and a display. This method preferably comprises at least the steps: Providing a display 7, in particularly a LCD TFT display, providing a frame 8 for covering or surrounding the display 7 at least in sections, Providing an adhesive tape 1 of a first type, wherein the adhesive tape 1 of the first type forms a composition at least comprising multiple layers of material 2, 3, 4, 5, 6, providing an adhesive tape 19 of a second type, wherein the adhesive tape 19 of the second type forms a composition at least comprising multiple layers of material 20, 21, wherein the compositions of the adhesive tape 1 of the first type and of the adhesive tape 19 of the second type differ from each other, wherein the adhesive tape 1 of the first type and the adhesive tape 19 of the second type are both comprising at least one conductive layer 4, 20 for conducting electric energy, applying the adhesive tape 1 of the first type and the adhesive tape 19 of the second type by means of one application head 29 onto the display 7 or onto the frame 8 and forming an endless conductor layer by interconnecting the adhesive tape of the first type and the adhesive tape of the second type, connecting the display 7 and frame 8, wherein at least the adhesive tape 1 of the first type and/or the adhesive tape 19 of the second type forms an adhesive connection between the display 7 and frame 8.

### List of reference numbers

- 1: LCD conductive cushion tape
- 2: polymer layer
- 3: adhesive layer
- 4: conductive cushion layer
- 5: conductive adhesive layer
- 6: release liner layer
- 7: LCD cell
- 8: TV plastic frame
- 9: first edge conductive tape
- 10: first side conductive cushion tape
- 11: second edge conductive tape
- 12: second side conductive cushion tape
- 13: third edge conductive tape
- 14: third side conductive cushion tape
- 15: forth edge conductive tape
- 16: forth side conductive cushion tape
- 17: conductive lane
- 18: grounding
- 19: edge conductive tape
- 20: conductive layer for an edge tape
- 21: adhesive layer for an edge tape
- 22: conductive cushion tape striped
- 23: conductive cushion tape
- 24: striped width
- 25: cutter means, in particular pneumatic cutter means
- 26: heated stripe blade
- 27: pressing roller
- 28: striped silicone layer

## Claims

1. Method for connecting a frame and a display,
at least comprising the steps:
Providing a display (7), in particular a LCD TFT display,
Providing a frame (8) for covering or surrounding the display (7) at least in sections,
Providing an adhesive tape (1) of a first type, wherein the adhesive tape (1) of the first type forms a composition at least comprising multiple layers of material (2, 3, 4, 5, 6),
Providing an adhesive tape (19) of a second type, wherein the adhesive tape (19) of the second type forms a composition at least comprising multiple layers of material (20, 21),
wherein the compositions of the adhesive tape (1) of the first type and of the adhesive tape (19) of the second type differ from each other,
wherein the adhesive tape (1) of the first type and the adhesive tape (19) of the second type are both comprising at least one conductive layer (4, 20) for conducting electric energy,
Applying the adhesive tape (1) of the first type and the adhesive tape (19) of the second type by means of one application head (29) onto the display (7) or onto the frame (8) and forming an endless conductor layer by interconnecting the adhesive tape of the first type and the adhesive tape of the second type,
Connecting the display (7) and frame (8), wherein at least the adhesive tape (1) of the first type and/or the adhesive tape (19) of the second type forms an adhesive connection between the display (7) and frame (8),
wherein the adhesive tape (1) of the first type at least comprises an adhesive layer (5), the conductive layer (4) and a polymer layer (2), in particular comprising or consisting of silicone, wherein the conductive layer (4) is arranged between the adhesive layer (5) and the polymer layer (2),
wherein removing the polymer layer (2) in predefined sections for forming predefined connection areas for setting up conductive connections between the adhesive tape (1) of the first type and the adhesive tape (19) of the second type.

2. Method according to claim 1,
**characterized in that**
the adhesive tape (1) of the first type further comprises an acrylic adhesive layer between the polymer layer (2) and conductive layer (4),
wherein the conductive layer (4) is a conductive cushion layer and
wherein the adhesive layer (5) is conductive.

3. Method according to claim 1,
**characterized in that**
removing the polymer layer (2) comprises a thermal treatment, in particular heating, of the predefined sections, wherein physical properties of the polymer layer (2) are changed due to the thermal treatment.

4. Method according to claim 3,
**characterized in that**
the polymer layer (2) is heated to a temperature above 20°C and/or below 200°C, in particularly to a temperature between 20°C and 200°C.

5. Method according to claim 1 or 3,
**characterized in that**
removing the polymer layer (2) further comprises striping the thermally treated polymer layer (2) by means of at least one heated stripe blade (26), wherein the heated stripe blade (26) is part of the application head (29) for applicating of at least the adhesive tape (1) of the first type.

6. Method according to claim 5,
**characterized in that**
the application head (29) further comprises a pressing roller (27) for pressing the stripes against the frame (8) or display (7) and a cutter means (25), in particularly a pneumatic cutter means, for cutting the tape (1).

7. Method according to claim 5 or 6,
**characterized in that**
the application head is also configured for applying the adhesive tape (19) of the second type ,
wherein the application head (29) moves by means of at least one robot arm or by means of servo motors.

8. Method according to any of claims 6 to 8,
**characterized in that**
the adhesive tape (1) of the first type and the adhesive tape (19) of the second type are applied in form of stripes,
wherein the stripes of the adhesive tape (1) of the first type are applied prior to the stripes of the adhesive tape (19) of the second type and wherein the predefined sections of the polymer layer (2) of each stripe of the adhesive tape (1) of the first type are removed prior to the application of the stripes of the adhesive tape (19) of the second type,
wherein each end of one stripe of the adhesive tape (19) of the second type covers more than 50% or more than 90% of the surface exposed by removing the polymer layer (2) in the predefined section of a stripe of the adhesive tape (1) of the first type.

9. Method according to any of the preceding claims,
**characterized in that**
the applied adhesive tape (1) of the first type has a thickness of less than 2mm, in particularly of less than 1,5mm or of less than 1mm or of less than 0,75mm, and a horizontal resistance of 1.0 Ω/mm² or of lower than 1.0 Ω/mm² and a vertical resistance of 1.0 Ω/mm² or of lower than 1.0 Ω/mm²
and
the applied adhesive tape (19) of the second type has a thickness of less than 2mm, in particularly of less than 1,5mm or of less than 1 mm or of less than 0,75mm, and a horizontal resistance of 1.0 Ω/mm² or of lower than 1.0 Ω/mm² and a vertical resistance of 1.0 Ω/mm² or of lower than 1.0 Ω/mm².

10. Method according to any of the preceding claims,
**characterized in that**
the adhesive tape (19) of the second type comprises or consists of a conductive adhesive layer (5) and a conductive cushion layer (4).

11. Electronic device,
at least comprising
a display (7) and a frame (8),
wherein the display (7) and frame (8) are connected by means of an adhesive tape (1) of a first type, wherein the adhesive tape (1) of the first type forms a composition at least comprising multiple layers of material (2, 3, 4, 5, 6),
wherein the adhesive tape (1) of the first type at least comprises an adhesive layer (5), a conductive layer (4) and a polymer layer (2), in particular comprising or consisting of silicone, wherein the conductive layer (4) is arranged between the adhesive layer (5) and the polymer layer (2), and
an adhesive tape (19) of a second type, wherein the adhesive tape (19) of the second type forms a composition different from the composition of the adhesive tape of the first type and at least comprising multiple layers of material (20, 21), one of them being a conductive layer, wherein the adhesive tape (19) of the first type is arranged as stripes, wherein the polymer layer (2) is removed at the ends of each stripe,
wherein the adhesive tape (19) of the second type is arranged as stripes
wherein each end of a stripe of an adhesive tape (19) of the second type forms a connection with one end of a stripe of the adhesive tape (1) of the first type by overlaying the latter to form an endless conductor layer.

12. Unit for manufacturing electronic devices, in particular for executing a method according to any of claims 1 to 11, at least comprising
one application head (29) for applying stripes of an adhesive tape (1) of a first type to a frame (8) or
display (7), wherein the adhesive tape (1) of the first type at least comprises an adhesive layer (5), a conductive layer (4) and a polymer layer (2), in particular comprising or consisting of silicone, wherein the conductive layer (4) is arranged between the adhesive layer (5) and the polymer layer (2),
wherein the application head (29) comprises a blade (26) for removing a polymer layer (2) from ends of the stripes of the adhesive tape (1) of the first type, wherein the application head (29) is configured for applying stripes of an adhesive tape (19) of a second type to the frame (8) or display (7), the adhesive tape of the second type having a composition different from the composition of the adhesive tape of the first type and comprising a conductive layer; a heating means for heating predefined sections of the adhesive tape (1) of the first type after or while the adhesive tape (1) of the first type is applied in form of stripes to the frame (8) or display (7) wherein the unit is adapted to apply the stripes of the adhesive tape of the first type and stripes of the adhesive tape of the second type such that their ends overlay to form an endless conductor and
an actuator for pressing the frame (8) and display (1) together.

13. Unit according to claim 12,
**characterized in that**
the heating means is part of the application head (29).

## Patentansprüche

1. Verfahren zum Verbinden eines Rahmens und eines Displays,
zumindest umfassend die Schritte:
Bereitstellen eines Displays (7), insbesondere eines LCD-TFT-Displays,
Bereitstellen eines Rahmens (8) zum zumindest abschnittsweisen Abdecken oder Umgeben des Displays (7),
Bereitstellen ein Klebeband (1) eines ersten Typs, wobei das Klebeband (1) des ersten Typs eine Zusammensetzung bildet, die mindestens mehrere Materialschichten (2, 3, 4, 5, 6) aufweist,
Bereitstellen eines Klebebands (19) eines zweiten Typs, wobei das Klebeband (19) des zweiten Typs eine Zusammensetzung bildet, die mindestens mehrere Materialschichten (20, 21) aufweist, wobei sich die Zusammensetzungen des Klebebands (1) des ersten Typs und des Klebeband (19) des zweiten Typs voneinander unterscheiden,
wobei das Klebeband (1) des ersten Typs und das Klebeband (19) des zweiten Typs jeweils mindestens eine leitende Schicht (4, 20) zum Leiten von elektrischer Energie aufweisen,
Aufbringen des Klebebandes (1) der ersten Typs und des Klebebandes (19) des zweiten Typs mittels eines Auftragskopfes (29) auf das Display (7) oder auf den Rahmen (8) und Bilden einer endlosen Leiterschicht durch Verbinden des Klebebandes des ersten Typs und des Klebebandes des zweiten Typs,
Verbinden des Displays (7) und Rahmen (8), wobei zumindest das Klebeband (1) des ersten Typs und/oder das Klebeband (19) des zweiten Typs eine Klebeverbindung zwischen Display (7) und Rahmen (8) bilden,
wobei das Klebeband (1) des ersten Typs mindestens eine Kleberschicht (5), die leitfähige Schicht (4) und eine Polymerschicht (2), die insbesondere Silikon aufweist oder aus Silikon besteht, aufweist, wobei die leitfähige Schicht (4) zwischen der Klebeschicht (5) und der Polymerschicht (2) angeordnet ist
**gekennzeichnet durch**
Entfernen der Polymerschicht (2) in vorgegebenen Abschnitten zur Bildung vorgegebener Verbindungsbereiche zum Herstellen leitender Verbindungen zwischen dem Klebeband (1) des ersten Typs und dem Klebeband (19) des zweiten Typs.

2. Verfahren nach Anspruch 1, **dadurch gekennzeichnet, dass** das Klebeband (1) des ersten Typs ferner eine Acrylkleberschicht zwischen der Polymerschicht (2) und der leitenden Schicht (4) umfasst, wobei die leitende Schicht (4) eine leitende Kissenschicht ist und wobei die Klebeschicht (5) leitend ist.

3. Verfahren nach Anspruch 1, **dadurch gekennzeichnet, dass** das Entfernen der Polymerschicht (2) eine thermische Behandlung, insbesondere Erwärmung, der vorgegebenen Abschnitte umfasst, wobei sich die physikalischen Eigenschaften der Polymerschicht (2) aufgrund der thermischen Behandlung ändern.

4. Verfahren nach Anspruch 3, **dadurch gekennzeichnet, dass** die Polymerschicht (2) auf eine Temperatur über 20 ° C und/oder unter 200 ° C, insbesondere auf eine Temperatur zwischen 20 ° C und 200 ° C, erwärmt wird.

5. Verfahren nach Anspruch 1 oder 3, **dadurch gekennzeichnet, dass** das Entfernen der Polymerschicht (2) weiterhin das Abziehen der thermisch behandelten Polymerschicht (2) mittels mindestens einer beheizten Abziehklinge (26) umfasst, wobei die beheizte Abziehklinge (26) ein Teil des Auftragskopfes (29) zum Aufbringen von zumindest dem Klebeband (1) der ersten Typs ist.

6. Verfahren nach Anspruch 5, **dadurch gekennzeichnet, dass** der Auftragskopf (29) ferner einen Andruckroller (27) zum Andrücken der Streifen gegen den Rahmen (8) oder das Display (7) und eine Schneideinrichtung (25), insbesondere eine pneumatische Schneideinrichtung, zum Schneiden des Bandes (1) aufweist.

7. Verfahren nach Anspruch 5 oder 6, **dadurch gekennzeichnet, dass** der Auftragskopf auch zum Aufbringen des Klebebandes (19) des zweiten Typs ausgebildet ist, wobei sich der Auftragskopf (29) mittels mindestens einen Roboterarm oder mittels Servomotoren bewegt.

8. Verfahren nach einem der Ansprüche 5 bis 8, **dadurch gekennzeichnet, dass** das Klebeband (1) des ersten Typs und das Klebeband (19) des zweiten Typs in Form von Streifen aufgebracht werden, wobei die Streifen des Klebebands (1)) des ersten Typs vor den Streifen des Klebebands (19) des zweiten Typs aufgebracht werden und wobei die vordefinierten Abschnitte der Polymerschicht (2) jedes Streifens des Klebebands (1) des ersten Typs vor dem Aufbringen der Streifen des Klebebandes (19) des zweiten Typs entfernt werden, wobei jedes Ende eines Streifens des Klebebandes (19) des zweiten Typs mehr als 50% oder mehr als 90% der durch Entfernen der Polymerschicht (2) in dem vordefinierten Abschnitt eines Streifens des Klebebands (1) des ersten Typs freigelegten Oberfläche bedeckt.

9. Verfahren nach einem der vorhergehenden Ansprüche, **dadurch gekennzeichnet, dass** das aufgebrachte Klebeband (1) des ersten Typs eine Dicke von weniger als 2 mm, insbesondere von weniger als 1,5 mm oder von weniger als 1 mm oder von weniger als 0,75 mm, hat und einen horizontalen Widerstand von 1,0 Ω / mm² oder weniger als 1,0 Ω / mm² und einen vertikalen Widerstand von 1,0 Ω / mm² oder weniger als 1,0 Ω / mm² hat und das aufgebrachte Klebeband (19) des zweiten Typs eine Dicke von weniger als 2 mm, insbesondere von weniger als 1,5 mm oder von weniger als 1 mm oder von weniger als 0,75 mm, und einen horizontalen Widerstand von 1,0 Ω / mm² oder von weniger als 1,0 Ω / mm² und einem vertikalen Widerstand von 1,0 Ω / mm² oder von weniger als 1,0 Ω / mm² hat.

10. Verfahren nach einem der vorhergehenden Ansprüche, **dadurch gekennzeichnet, dass** das Klebeband (19) des zweiten Typs eine leitende Klebeschicht (5) und eine leitende Kissenschicht (4) aufweist oder daraus besteht.

11. Elektronisches Gerät,
zumindest aufweisend
eine Anzeige (7) und einen Rahmen (8),
wobei die Anzeige (7) und der Rahmen (8) mittels eines Klebebandes (1) eines ersten Typs verbunden sind, wobei das Klebeband (1) des ersten Typs eine Zusammensetzung bildet, die mindestens mehrere Materialschichten (2, 3, 4, 5, 6) aufweist,
wobei das Klebeband (1) des ersten Typs mindestens eine Kleberschicht (5), eine leitende Schicht (4) und eine Polymerschicht (2) aufweist, insbesondere Silikon aufweisend oder aus Silikon bestehend, wobei die leitende Schicht (4) zwischen der Klebeschicht (5) und der Polymerschicht (2) angeordnet ist, und ein Klebeband (19) eines zweiten Typs,
wobei das Klebeband (19) des zweiten Typs eine Zusammensetzung bildet, die mindestens mehrere Materialschichten (20, 21) aufweist, wobei eine der Materialschichten eine leitende Schicht ist, und
die von der Zusammensetzung des Klebebands des ersten Typs verschieden ist,
wobei das Klebeband (19) des ersten Typs als Streifen angeordnet ist, wobei die Polymerschicht (2) an den Enden jedes Streifens entfernt ist,
wobei das Klebeband (19) des zweiten Typs als Streifen angeordnet ist, wobei jedes Ende eines Streifens eines Klebebandes (19) des zweiten Typs durch Überlagerung eine Endlosverbindung mit einem Ende eines Streifens des Klebebandes (1) des ersten Typs zum Ausbilden einer Endlosleiterschicht bildet.

12. Einheit zur Herstellung elektronischer Geräte, insbesondere zum Ausführen eines Verfahrens nach einem der Ansprüche 1 bis 11,
mindestens aufweisend:
einem Auftragskopf (29) zum Aufbringen von Streifen eines Klebebandes (1) eines ersten Typs auf einen Rahmen (8) oder ein Display (7), wobei das Klebeband (1) des ersten Typs mindestens eine Kleberschicht (5), die leitfähige Schicht (4) und eine Polymerschicht (2), die insbesondere Silikon aufweist oder aus Silikon besteht, aufweist, wobei die leitfähige Schicht (4) zwischen der Klebeschicht (5) und der Polymerschicht (2) angeordnet ist,
wobei der Auftragskopf (29) eine Klinge (26) zum Entfernen einer Polymerschicht (2) von Enden der Streifen des Klebebands (1) des ersten Typs aufweist, wobei der Auftragskopf (29) zum Aufbringen von Streifen eines Klebebands (19) eines zweiten Typs an dem Rahmen (8) oder Display (7) konfiguriert ist, wobei des Klebeband des zweiten Typs eine leitfähige Schicht aufweist und eine Zusammensetzung hat, die von der Zusammensetzung des Klebebands des ersten Typs verschieden ist,
eine Heizeinrichtung zum Erwärmen vorgegebener Abschnitte des Klebebandes (1) des ersten Typs nach dem oder währenddessen das Klebeband (1) des ersten Typs in Form von Streifen auf dem Rahmen (8) oder dem Display (7) angeordnet wird
und
einen Aktuator um den Rahmen (8) und das Display (1) zusammenzudrücken.

13. Einheit nach Anspruch 12, **dadurch gekennzeichnet, dass** die Heizeinrichtung Teil des Auftragskopfes (29) ist.

## Revendications

1. Procédé de connexion d'un cadre et d'un écran,
au moins de manière exhaustive les étapes :
fournir un affichage (7), en particulier un affichage LCD-TFT,
Mise à disposition d'un cadre (8) pour couvrir ou entourer l'affichage (7) au moins par sections,
Fournir un ruban adhésif (1) d'un premier type, dans lequel le ruban adhésif (1) du premier type forme une composition comprenant au moins plusieurs couches de matériau (2, 3, 4, 5, 6),
Fourniture d'un ruban adhésif (19) d'un second type, le ruban adhésif (19) du second type formant une composition comprenant au moins plusieurs couches de matériau (20, 21), les compositions du ruban adhésif (1) du premier type et du ruban adhésif (19) du second type étant différentes l'une de l'autre,
dans laquelle le ruban adhésif (1) du premier type et le ruban adhésif (19) du second type comportent chacun au moins une couche conductrice (4, 20) pour conduire l'énergie électrique,
Appliquer le ruban adhésif (1) du premier type et le ruban adhésif (19) du second type au moyen d'une tête d'application (29) sur l'écran (7) ou sur le cadre (8) et former une couche conductrice continue en joignant le ruban adhésif du premier type et le ruban adhésif du second type,
Liaison entre l'écran (7) et le cadre (8), dans laquelle au moins le ruban adhésif (1) du premier type et/ou le ruban adhésif (19) du second type forment une liaison adhésive entre l'écran (7) et le cadre (8),
le ruban adhésif (1) du premier type comprenant au moins une couche adhésive (5), la couche conductrice (4) et une couche polymère (2) comprenant, en particulier, du silicone ou constituée de silicone, la couche conductrice (4) étant disposée entre la couche adhésive (5) et la couche polymère (2)
**caractérisé par**
Enlever la couche de polymère (2) en sections prédéterminées pour former des zones de liaison prédéterminées afin d'établir des connexions conductrices entre le ruban adhésif (1) du premier type et le ruban adhésif (19) du second type.

2. Procédé selon la revendication 1, **caractérisé en ce que** le ruban adhésif (1) du premier type comprend en outre une couche adhésive acrylique entre la couche polymère (2) et la couche conductrice (4), dans lequel la couche conductrice (4) est une couche de coussin conductrice et dans lequel la couche adhésive (5) est conductrice.

3. Procédé selon la revendication 1, **caractérisé en ce que** l'élimination de la couche de polymère (2) comprend un traitement thermique, en particulier un chauffage, des parties prédéterminées, dans lequel les propriétés physiques de la couche de polymère (2) changent en raison du traitement thermique.

4. Procédé selon la revendication 3, **caractérisé en ce que** la couche de polymère (2) est chauffée à une température supérieure à 20°C et/ou inférieure à 200°C, en particulier à une température comprise entre 20°C et 200°C.

5. Procédé selon la revendication 1 ou 3, **caractérisé en ce que** l'enlèvement de la couche de polymère (2) comprend en outre le pelage de la couche de polymère (2) traitée thermiquement au moyen d'au moins une lame de pelage chauffée (26), dans lequel la lame de pelage chauffée (26) fait partie de la tête d'application (29) pour appliquer au moins le ruban adhésif (1) du premier type.

6. Procédé selon la revendication 5, **caractérisé en ce que** la tête d'application (29) comprend en outre un rouleau de pression (27) pour presser les bandes contre le cadre (8) ou l'écran (7) et un dispositif de coupe (25), en particulier un dispositif de coupe pneumatique, pour couper la bande (1).

7. Procédé selon la revendication 5 ou 6, **caractérisé en ce que** la tête d'application est également conçue pour appliquer le ruban adhésif (19) du second type, la tête d'application (29) se déplaçant au moyen d'au moins un bras de robot ou au moyen de servomoteurs.

8. Procédé selon l'une quelconque des revendications 5 à 8, **caractérisé en ce que** le ruban adhésif (1) du premier type et le ruban adhésif (19) du second type sont appliqués sous forme de bandes, dans lequel les bandes du ruban adhésif (1) du premier type sont appliquées avant les bandes du ruban adhésif (19) du second type et dans lequel les parties prédéfinies de la couche polymère (2) de chaque bande du ruban adhésif (1) du premier type sont enlevées avant l'application des bandes du ruban adhésif (19) du second type, dans lequel chaque extrémité d'une bande dudit ruban adhésif du second type (19) couvre plus de 50% ou plus de 90% de la surface exposée en enlevant la couche de polymère (2) dans la partie prédéfinie d'une bande dudit ruban adhésif du premier type (1).

9. Procédé selon l'une des revendications précédentes, **caractérisé en ce que** le ruban adhésif appliqué (1) du premier type a une épaisseur inférieure à 2 mm, en particulier inférieure à 1,5 mm ou inférieure à 1 mm ou inférieure à 0,75 mm, et a une résistance horizontale de 1,0 Ω / mm2 ou inférieure à 1,0 Ω / mm2 et une résistance verticale de 1,0 Ω / mm2 ou inférieure à 1,0 Ω / mm2 et le ruban adhésif (19) appliqué du second type a une épaisseur inférieure à 2 mm, notamment inférieure à 1,5 mm ou inférieure à 1 mm ou inférieure à 0,75 mm, et une résistance horizontale de 1,0 Ω / mm2 ou inférieure à 1,0 Ω / mm2 et une résistance verticale de 1,0 Ω / mm2 ou inférieure à 1,0 Ω / mm2

10. Procédé selon l'une des revendications précédentes, **caractérisé en ce que** le ruban adhésif (19) du second type comprend ou est constitué d'une couche adhésive conductrice (5) et d'une couche de coussin conductrice (4).

11. Dispositif électronique,
ayant au moins
un affichage (7) et un cadre (8),
dans lequel l'écran (7) et le cadre (8) sont reliés au moyen d'un ruban adhésif (1) d'un premier type, le ruban adhésif (1) du premier type formant une composition comprenant au moins plusieurs couches de matériau (2, 3, 4, 5, 6),
dans lequel le ruban adhésif (1) du premier type comprend au moins une couche adhésive (5), une couche conductrice (4) et une couche polymère (2), comprenant en particulier du silicone ou constituée de silicone, la couche conductrice (4) étant disposée entre la couche adhésive (5) et la couche polymère (2), et un ruban adhésif (19) d'un second type,
dans lequel le ruban adhésif (19) du second type forme une composition comprenant au moins plusieurs couches de matériau (20, 21), l'une des couches de matériau étant une couche conductrice, et
qui est différente de la composition du ruban adhésif du premier type,
dans lequel le ruban adhésif (19) du premier type est disposé en bandes, la couche de polymère (2) étant enlevée aux extrémités de chaque bande,
dans lequel le ruban adhésif (19) du second type est disposé sous forme de bande, chaque extrémité d'une bande d'un ruban adhésif (19) du second type formant une connexion sans fin par superposition avec une extrémité d'une bande du ruban adhésif (1) du premier type pour former une couche conductrice sans fin.

12. Unité de fabrication de dispositifs électroniques, en particulier pour la réalisation d'un processus selon l'une des revendications 1 à 11,
ayant au moins
une tête d'application (29) pour appliquer des bandes d'un ruban adhésif (1) d'un premier type sur un cadre (8) ou un affichage (7), le ruban adhésif (1) du premier type comprenant au moins une couche adhésive (5), la couche conductrice (4) et une couche polymère (2), qui comprend en particulier du silicone ou est constituée de silicone, la couche conductrice (4) étant disposée entre la couche adhésive (5) et la couche polymère (2),
dans lequel la tête d'application (29) comprend une lame (26) pour enlever une couche de polymère (2) des extrémités des bandes du ruban adhésif du premier type (1), la tête d'application (29) étant configurée pour appliquer des bandes d'un ruban adhésif du second type (19) sur le cadre (8) ou l'affichage (7), le ruban adhésif du second type comprenant une couche conductrice et ayant une composition différente de la composition du ruban adhésif du premier type,
un dispositif de chauffage pour chauffer des parties prédéterminées du ruban adhésif (1) du premier type après ou pendant lequel le ruban adhésif (1) du premier type est disposé sous forme de bandes sur le cadre (8) ou l'écran (7)
et
un actionneur pour presser ensemble le cadre (8) et l'écran (1).

13. Unité selon la revendication 12, **caractérisée en ce que** le dispositif de chauffage fait partie de la tête d'application (29).
